# DEMANDE DE BREVET EUROPEEN

(11) **EP 1 388 568 A1**
(43) Date de publication de la demande: **11.02.2004**
(21) Numéro de dépôt: 02017912.3
(22) Date de dépôt: 09.08.2002
(51) Int. Cl.: C08L 23/00, C08J 9/00

(54) **Mousses à base de polyoléfines**

(71) Demandeur: NMC S.A., 4731 Raeren/Eynatten (BE)
(72) Inventeur: Job, Denis, 4031 Angleur (BE); Mayeres, Jean-Pierre, 4700 Eupen (BE)
(74) Mandataire: Kihn, Pierre Emile Joseph

(57) **Abrégé**

L'invention concerne des mousses à base de polyoléfines comprenant au moins une cire de polyéthylène homopolymère ou copolymère oxydée.

## Description

La présente invention concerne des mousses à base de polyoléfines. L'invention concerne également l'utilisation de cires de polyéthylène homopolymère ou copolymère oxydées dans le moussage de polyoléfines ainsi qu'un procédé de fabrication de telles mousses.

Pour des applications techniques, comme par exemple les mousses d'isolation thermique pour les conduites de fluides caloporteurs, comme p.ex. les conduites de chauffages centraux, les conduites de conditionnements d'air ou les conduites de cycles frigorifiques, il est connu de devoir ajouter à une composition à base de polyoléfines des teneurs non négligeables d'additifs fonctionnels peu ou pas fusibles lors du procédé de transformation.

Par polyoléfine, on entend les polyéthylènes LLDPE, LDPE, HDPE; les copolymères EVA, EBA, EMA, les PE métallocènes, les PE chlorés, les polypropylènes que ce soit des homopolymères ou des copolymères de type random, block, hétérophasiques ou branchés. Ces produits peuvent soit s'employer individuellement ou en mélange.

Les additifs communément employés peuvent être des additifs de type anti-feu (p.ex. des paraffines chlorées, des composés bromés aliphatiques ou aromatiques, du trioxyde d'antimoine,...), des agents absorbant, réfléchissant ou diffractant les rayons infrarouges pour une amélioration de l'isolation thermique (p.ex. des particules de métaux ou d'oxyde métalliques, de mica, de dioxyde de titane, de graphite, de noirs de carbone, de kaolin,... ) et/ou des agents nucléants pour régulariser la structure cellulaire (p.ex. du talc, du carbonate de calcium, de la silice finement précipitée).

Dans le cas des additifs métalliques, minéraux ou antifeu à point de fusion élevé, ces produits ou charges ne fondent pas ou très peu pendant l'étape de plastification en extrusion et restent donc quasiment inaltérées une fois la mousse formée.

L'incorporation de ces additifs interfère hélas souvent avec le moussage. Chaque particule d'additif est un site potentiel pour la croissance d'une bulle de gaz, et on peut observer une nucléation surabondante ce qui nuit à la qualité de la mousse, surtout en très basses densités (de 10 à 25 kg/m³). De plus, chaque particule sertie dans les parois cellulaires, constitue un défaut potentiel de structure dommageable à l'intégrité de la paroi cellulaire et donc une source de rupture, provoquant alors des cellules ouvertes qui diminuent l'efficacité d'isolation de la mousse (transmission de la vapeur d'eau, de la chaleur).

L'utilisation de divers agents pour augmenter la taille cellulaire pour améliorer la qualité de la mousse lorsque l'on désire incorporer des charges dans un but fonctionnel est connu.

Le brevet US 4,275,168 divulgue l'utilisation d'acides aminés et d'alcool polyhydriques pour uniformiser et augmenter la taille cellulaire de mousses de polyoléfines avec des charges (antifeu, carbon black,...). Ces produits sont cependant chers.

La demande de brevet WO 80/02007 préconise l'addition de cire de candelilla raffinée, extraite de feuilles d'Euphorbia. Cette cire est constituée d'un mélange complexe d'esters d'acide gras, d'acides gras, d'alcools-stérols-résines ....

### Objet de l'invention

L'objet de la présente invention est de proposer une mousse comprenant un nouvel additif agissant sur la structure cellulaire d'une mousse de polyoléfine.

### Description générale de l'invention

Conformément à l'invention, cet objectif est atteint par une mousse à base de polyoléfines comprenant au moins une cire de polyéthylène homopolymère ou copolymère oxydée.

Le mérite de la présente invention consiste en la mise en évidence du rôle favorable d'une famille d'additifs aisément disponible et économique, non toxique, les cires de polyéthylène homopolymère ou copolymère oxydées. Ces cires agissent sur la structure cellulaire de la mousse et améliorent considérablement celle-ci même à haut taux de charges quelque soit la densité (de 10 à 100 kg/m³). L'utilisation de ces cires permet la fabrication d'articles moussés très flexibles, à très basse densité de moussage (entre 10 et 25 kg/m³) à base de polymères oléfiniques, non-styrèniques.

Selon un premier mode de réalisation avantageux, la mousse comprend entre 0.01 % et 10% en poids de cire de polyéthylène homopolymère ou copolymère oxydée par rapport au poids de la mousse.

Avantageusement, la cire de polyéthylène homopolymère ou copolymère oxydée répond à la formule générale suivante :

(-CH₂-CH₂-)_{X}-(-CH₂-CH-R-)_{Y}

dans laquelle R représente indépendamment un groupe OH , un groupe COOH, un groupe =O, un groupe -O-CO-CH₃, un groupe COOR', où R' représente un alcane ayant entre 1 et 20 atomes de carbone et x et y représente des nombres entiers compris entre 10 et 10000.

La mousse peut comprendre en outre des additifs choisis parmi le groupe constitué des additifs de type anti-feu, des agents absorbant, réfléchissant ou diffractant les rayons infrarouges et/ou des agents nucléants pour régulariser la structure cellulaire.

La polyoléfine de la mousse est choisie de préférence parmi le groupe constitué des polyéthylènes LLDPE, LDPE, HDPE; des copolymères EVA, EBA, EMA, des PE métallocènes, les PE chlorés et des polypropylènes ou de leurs mélanges, la polyoléfine pouvant être sous forme de homopolymère, de copolymère de type random, block, hétérophasique ou branché.

Selon un autre aspect de la présente invention, on propose un produit d'isolation thermique comprenant une mousse à base de polyoléfine.

Selon encore un autre aspect de la présente invention, on propose l'utilisation de cire de polyéthylène homopolymère ou copolymèreoxydé en tant qu'agent de contrôle de la croissance de cellules dans la fabrication de mousses à base de polyoléfines.

L'invention concerne également un procédé de fabrication de mousse en extrusion par injection directe de gaz. Ce procédé comprend les étapes suivantes:
a) dosage des polyoléfines, cires de polyéthylène ou copolymère oxydé et additifs, prémélangés ou dosés individuellement, à l'alimentation d'une extrudeuse (simple vis, double vis co-rotative ou contre-rotative);
b) plastification du mélange polymères + additifs par chauffage à haute température du cylindre et mélange par la vis pour fondre entièrement la masse et l'homogénéiser;
c) injection dans le cylindre d'un gaz de moussage à l'endroit où la viscosité du mélange polymères + additifs est la plus appropriée;
d) homogénéisation de la masse de polymères + additifs + gaz;
e) refroidissement de la masse: dernières zones du cylindre plus froides, section de refroidissement statique, homogénéisation;
f) extrusion à travers une filière, controllée en température, ayant une section de forme prédéfinie selon l'application finale de la mousse, la masse subissant une chute importante de pression qui entraîne la formation des bulles de gaz, provoquant la formation de la mousse à l'air libre;
g) refroidissement, étirage et guidage de la mousse:

La mousse extrudée est guidée, par une étireuse pratiquement sans tension, dans une section de refroidissement (air ou eau ou les deux) pour figer la structure désirée.

### Description à l'aide des exemples

D'autres particularités et caractéristiques de l'invention ressortiront de la description détaillée de quelques modes de réalisation avantageux présentés ci-dessous à titre d'illustration.

### Exemple 1 :

On prépare un mélange de référence (1) dans un fût rotatif de:
- 96 parts d'un polyéthylène basse densité ayant une densité de 926 kg/m³ et un MFI (190°C, 2.16 kg) = 2 g/10 min.;
- 6 parts d'un masterbatch d'antifeu (paraffine chlorée + trioxyde d'antimoine) concentré à 50% en poids sur base LDPE;
- 3 parts d'un masterbatch d'oxyde d'aluminium concentré à 40% en poids sur base LDPE;
- 1.5 parts de stéaramide;
- 1 part d'un masterbatch de talc à 25% en poids sur base LDPE.

La mousse est extrudée à 18 kg/h avec 3.06 kg d'isobutane par heure, à travers une filière ronde, pour donner un joint rond de ± 23 mm de diamètre. La température à l'outil est de 108°C. La densité mesurée à chaud est de 16.5 kg/m³, les cellules sont très fines (± 870 à 1000 cellules/cm²) et des trous sont présents, une distribution irrégulière des cellules est visible. La surface de la mousse est couverte de grosses bulles. Le jour suivant la mousse a une densité de 20 kg/m³ et montre des signes d'un retrait irréversible après 4 jours.

### Exemple 2 :

mélange de référence (1) + 0.5 parts de LICOLUB VP H 29 (CLARIANT, T° fusion = 120-125°C, viscosité = 3000 mPa.s / 140°C, nombre d'acidité = 15 - 19 mg KOH/g):

Dans les mêmes conditions opératoires que dans l'exemple 1, la mousse devient correcte, la distribution des cellules est beaucoup plus régulière, la surface est exempte de bulles. La densité à chaud est de 16.2 kg/m³, la densité cellulaire est de ± 450 cellules/cm², il n'y a pas de retrait visible au fil des jours.

### Exemple 3 :

mélange de référence (1) + 0.5 parts de cire LUWAX OA (BASF, T° fusion = 94-104°C, viscosité = mPa.s / 140°C, nombre d'acidité=19-25 mg KOH/g).

Dans les mêmes conditions opératoires qu'à l'exemple 1, la mousse est correcte, la distribution des cellules est beaucoup plus régulière, la surface est exempte de bulles. La densité à chaud est de 16.2 kg/m³, la densité cellulaire est de ± 650 cellules/cm², il n'y a pas de retrait visible au fil des jours.

### Exemple 4 :

mélange de référence (1) + 0.5 parts de cire AC-680 A (HONEYWELL, T° fusion = 108°C, viscosité =250 mPa.s / 140°C, nombre d'acidité = 15 - 18 mg KOH/g):

Dans les mêmes conditions opératoires qu'à l'exemple 1, la mousse est correcte, la distribution des cellules est beaucoup plus régulière, la surface est exempte de bulles. La densité à chaud est de 15.8 kg/m³, la densité cellulaire est de ± 650 cellules/cm², il n'y a pas de retrait visible au fil des jours.

### Exemple 5 :

mélange de référence (1) + 0.5 parts de cire LUWAX OA 2 (BASF, T° fusion 103 - 112°C, viscosité = mPa.s / 140°C, nombre d'acidité = 19 - 25 mg KOH/g):

Dans les mêmes conditions opératoires qu'à l'exemple 1, la mousse est correcte, la distribution des cellules est beaucoup plus régulière, la surface est exempte de bulles. La densité à chaud est de 16.2 kg/m³, la densité cellulaire est de ± 870 cellules/cm², il n'y a pas de retrait visible au fil des jours.

### Exemple 6:

On prépare un mélange de référence (2) dans un fût rotatif de:
- 96 parts d'un copolymère EVA ayant 14% de Vinyl acétate et un MFI (190°C, 2.16 kg) = 5 g/10min.;
- 6 parts d'un masterbatch d'antifeu (parafine chlorée + trioxyde d'antimoine) concentré à 50% en poids sur base EVA;
- 3 parts d'un masterbatch d'oxyde d'aluminium concentré à 40% en poids sur base EVA;
- 1.5 parts de stéaramide;
- 1 part d'un masterbatch de talc à 25% en poids sur base EVA.

La mousse est extrudée à 18 kg/h avec 3.06 kg d'isobutane par heure, à travers une filière ronde, pour donner un joint rond de ± 26 mm de diamètre. La température à l'outil est de 82°C. La densité mesurée à chaud est de 17.5 kg/m³, les cellules sont assez fines (± 650 cellules/cm²). La surface de la mousse est bonne.

### Exemple 7 :

mélange de référence (2) + 0.5 parts de LICOLUB VP H 29 (CLARIANT, T° fusion = 120-125°C, viscosité = 3000 mPa.s / 140°C, nombre d'acidité = 15 - 19 mg KOH/g):

Dans les mêmes conditions opératoires que l'exemple 6, la densité à chaud est de 16.9 kg/m³, la densité cellulaire est à présent de ± 350 cellules/cm², illustrant ici l'effet d'agent de contrôle de la croissance de cellules, ce qui rend possible la réalisation de mousses de formes complexes, très délicates à extruder si les cellules sont trop fines, par manque de stabilité mécanique.

### Exemple 8 :

On prépare un mélange de référence (3) dans un fût rotatif de:
- 60 parts d'un PP copolymère bloc ayant un MFI (230°C, 2.16 kg) = 0.3 g/10min.;
- 40 parts d'un PP high melt-strength (PROFAX 814, BASELL) ayant un MFI (230°C, 2.16 kg) = 2.8 g/10min;
- 3 parts d'un masterbatch d'antifeu bromé [tétrabromobisphenol A bis (2,3 dibromopropyl ether)] concentré à 80% dans du LDPE;
- 3 parts d'un masterbatch d'antioxydants concentré à 20% dans du PP copolymère statistique;
- 3 parts d'un masterbatch d'oxyde d'aluminium concentré à 40% en poids sur base EVA;
- 1 part de monostérate de glycérol (90% alpha) ;
- 3 parts d'un masterbatch de fluoropolymère à 5% en poids sur base LLDPE.
- 1 part de masterbatch de trioxyde d'antimoine concentré à 80%

La mousse est extrudée à 40 kg/h avec 3.6 kg d'isobutane par heure, à travers une filière ronde avec un pointeau pour faire un tube de ± 18 mm de diamètre intérieur et une épaisseur d'environ 13 mm. La température à l'outil est de 155°C. La densité mesurée à chaud est de 28 kg/m³, les cellules sont fort fines (± +de 1500 cellules/cm²!). La surface de la mousse est mauvaise, il y a des lignes apparentes.

### Exemple 9:

mélange de référence (3) + 0.5 parts de LICOLUB VP H 29 (CLARIANT, T° fusion = 120-125°C, viscosité = 3000 mPa.s / 140°C, nombre d'acidité = 15 - 19 mg KOH/g):

Dans les mêmes conditions opératoires que l'exemple 8, la densité à chaud est de 26.9 kg/m³, la densité cellulaire est à présent de ± 450 cellules/cm². L'aspect général est bon, il n'y a plus de lignes en surface.

### Exemple 10:

On prépare un mélange de référence (4) dans un fût rotatif de:
- 45 parts de polyéthylène chloré (TYRIN, DuPont-Dow)
- 36 parts de polyéthylène basse densité ayant une densité de 920 kg/m³ et un MFI (190°C, 2.16 kg) = 0.7 g/10 min.;
- 10 parts d'un polyéthylène métallocène comonomère Hexène (Exceed ML 2518FC, Exxon Mobil, denisté 918 kg/m³, MFI (190°C, 2.16 kg) = 2.5 g/10 min.);
- 12 parts d'un masterbatch d'antifeu bromé [tétrabromobisphenol A bis (2,3 dibromopropyl ether)] concentré à 80% dans du LDPE;
- 7 parts d'un masterbatch de trioxyde d'antimoine concentré à 80% dans du LDPE;
- 5 parts de masterbatch de couleur noir sur base LDPE;
- 3 parts de stéaramide;
- 2 parts de stabilisant capteur d'acides

La mousse est extrudée à 55 kg/heure avec 5.58 kg d'isobutane par heure, à travers une filière ronde avec un pointeau pour faire un tube de ± 12 mm de diamètre interne et une épaisseur d'environ 9 mm. La température à l'outil est de ± 105 °C. La densité est de 35 kg/m³, la mousse possède des cellules trop fines (>1500 cellules/cm²) et le tube n'est alors pas rond mais ovale. Des lignes apparaissent après un certain temps à la surface de la mousse.

### Exemple 11:

mélange de référence (4) + 0.5 parts de LICOLUB VP H 29 (CLARIANT, T° fusion = 120-125°C, viscosité = 3000 mPa.s / 140°C, nombre d'acidité=15-19 mg KOH/g) : Dans les mêmes conditions opératoires que l'exemple 10, la densité à chaud est de 28.7 kg/m³, la densité cellulaire tombe à 870 cellules/cm², le tube est à présent bien rond et la surface ne présente aucun défauts.

## Revendications

1. Mousse à base de polyoléfines comprenant au moins une cire de polyéthylène homopolymère ou copolymère oxydée.

2. Mousse selon la revendication 1, **caractérisée en ce qu'**elle comprend entre 0.01 % et 10% en poids de cire de polyéthylène homopolymère ou copolymère oxydée par rapport au poids de la mousse.

3. Mousse selon l'une quelconque des revendications précédentes, **caractérisé en ce que** la cire de polyéthylène homopolymère ou copolymère oxydée répond à la formule générale suivante :
(-CH₂-CH₂-)_{X}-(-CH₂-CHR-)_{Y}
dans laquelle R représente indépendamment un groupe OH , un groupe COOH, un groupe =O, un groupe -O-CO-CH₃, un groupe COOR', où R' représente un alcane ayant entre 1 et 20 atomes de carbone et x et y représente des nombres entiers compris entre 10 et 10000.

4. Mousse selon l'une quelconque des revendications précédentes, **caractérisé en ce qu'**elle comprend en outre des additifs choisis parmi le groupe constitué de des additifs de type anti-feu, des agents absorbant, réfléchissant ou diffractant les rayons infrarouges et/ou des agents nucléants pour régulariser la structure cellulaire.

5. Mousse selon l'une quelconque des revendications précédentes, **caractérisé en ce que** la polyoléfine est choisie parmi le groupe constitué des polyéthylènes LLDPE, LDPE, HDPE; des copolymères EVA, EBA, EMA, des PE métallocènes, des PE chlorés et des polypropylènes ou de leurs mélanges.

6. Mousse selon la revendication 5, **caractérisé** en ce la polyoléfine peut être sous forme d'homopolymère, de copolymère de type random, block, hétérophasique ou branché.

7. Produit d'isolation thermique comprenant une mousse selon l'une quelconque des revendications précédentes.

8. Utilisation de cire de polyéthylène homopolymère ou copolymère oxydée en tant qu'agent de contrôle de la croissance de cellules dans la fabrication de mousses à base de polyoléfines.

9. Procédé de fabrication de mousses à base de polyoléfines selon l'une quelconque des revendications 1 à 6, **caractérisé en ce que** la polyoléfine est mélangée à chaud avec de la cire de polyéthylène homopolymère ou copolymère oxydée et puis extrudé.

10. Procédé selon la revendication 10, **caractérisé en ce qu'**on ajoute un agent de moussage dans l'extrudeuse et **en ce qu'**on extrude le mélange ainsi obtenu afin d'obtenir une mousse.
